# EUROPÄISCHE PATENTSCHRIFT

(11) **EP 2 084 422 B1**
(45) Veröffentlichungstag und Bekanntmachung des Hinweises auf die Patenterteilung: **25.06.2014**
(21) Anmeldenummer: 07821715.5
(22) Anmeldetag: 23.10.2007
(51) Int. Cl.: F16D 55/2265

(54) **SCHEIBENBREMSE, INSBESONDERE FÜR EIN NUTZFAHRZEUG**
DISK BRAKE, IN PARTICULAR FOR A UTILITY VEHICLE
FREIN À DISQUE DESTINÉ EN PARTICULIER À UN VÉHICULE UTILITAIRE

(30) Priorität: 24.10.2006 DE 102006050647
(43) Veröffentlichungstag der Anmeldung: 05.08.2009
(73) Patentinhaber: KNORR-BREMSE Systeme für Nutzfahrzeuge GmbH, 80809 München (DE)
(72) Erfinder: BAUMGARTNER, Johann, 85368 Moosburg (DE); TRIMPE, Robert, 82234 Wessling (DE); FISCHER, Rudolf, 85435 Erding (DE)
(74) Vertreter: Mattusch, Gundula
(86) Internationale Anmeldenummer: PCT/EP2007/061351
(87) Internationale Veröffentlichungsnummer: WO 2008/049841

(56) Entgegenhaltungen:
- EP-A- 0 253 707
- WO-A-2006/024513
- DE-A1- 10 245 027
- JP-A- 57 012 131

## Beschreibung

Die Erfindung betrifft eine Scheibenbremse, insbesondere für ein Nutzfahrzeug, entsprechend dem Oberbegriff des Anspruchs 1.

Bei solchen Scheibenbremsen, die vornehmlich bei schweren Nutzfahrzeugen zum Einsatz kommen, ist der Bremssattel, der auch als Schiebesattel bezeichnet wird, durch Befestigungselemente mit dem fahrzeugseitigen Bremsträger verbunden. Dabei greifen Führungsholme in den Bremsträger ein, die andererseits in Gleitlagern des Bremssattels so geführt sind, dass eine axiale Verschiebung des Bremssattels, bezogen auf die Bremsscheibe, gegenüber dem ortsfesten Bremsträger möglich ist.

Von den Gleitlagern ist eines als Festlager mit geringem Gleitspiel ausgebildet, während das andere als Loslager fungiert, wodurch insbesondere Fertigungstoleranzen ausgeglichen werden.

Dabei hat sich der Einsatz einer Führungsbuchse im Loslager bewährt, die eine Lagerhülse aus einem Elastomer aufweist, die verschiebegesichert im Bremssattel gehalten ist. Neben niedrigen Herstellungskosten zeichnet sich eine solche Führungsbuchse durch eine gewisse Robustheit aus sowie eine einfache Montage. Daneben werden durch die Elastomer-Lagerhülse betriebsbedingte Klappergeräusche verhindert.

Zum Schutz des Führungsholms und der gemeinsam mit der Führungsbuchse gebildeten Gleitflächen ist es aus der DE 102 45 027 A1 bekannt, den Führungsholm auf seiner der Bremsscheibe abgewandten Stirnseite mit einer Kappe zu überdecken.

Die Führungsbuchse selbst, einschließlich der Elastomer-Lagerhülse liegt jedoch frei, was vor allem bei einem Einsatz in Fahrzeugen, die auf unbefestigten oder stark verschmutzten Straßen zum Einsatz kommen durch Steinschlag und Schmutzbeanspruchung zur Schädigung der Führungsbuchse und zum Eintritt von Schmutzwasser in den Führungsbereich führt. Daraus ergibt sich ein erhöhter Lagerverschleiß mit der Notwendigkeit eines vorzeitigen Austauschs der Führungsbuchse und gegebenenfalls des Führungsholms. Naturgemäß ist dies mit einem erheblichen Kostenaufwand verbunden, nicht zuletzt aufgrund der notwendigen Betriebsunterbrechung des Fahrzeuges.

Eine vergleichbare Konstruktion, bei der eine Elastomer-Lagerhülse stirnseitig von einer Kappe überdeckt wird, im Übrigen jedoch gegenüber der Umgebung frei liegt, ist in der JP 57 012131 A geoffenbart.

Der Erfindung liegt die Aufgabe zugrunde, eine Scheibenbremse der gattungsgemäßen Art so weiterzuentwickeln, dass mit konstruktiv und fertigungstechnischem geringem Aufwand die Standzeit auch unter extremen Betriebsbedingungen erhöht wird.

Diese Aufgabe wird durch eine Scheibenbremse mit den Merkmalen des Anspruchs 1 gelöst.

Mit geringem fertigungstechnischem Aufwand ist nun eine Abdichtung des Gleitbereichs zwischen der Führungsbuchse und dem Führungsholm erreicht, die die Elastomer-Lagerhülse mit einschließt. Insoweit kann von einer hermetischen Abdichtung des Gleitlagers gesprochen werden, durch die ein betriebsbedingter, d.h. beispielsweise durch Verschmutzung und Steinschlag verursachter Verschleiß ausgeschlossen werden kann.

Naturgemäß führt dies zur Betriebskostenreduzierung des eingesetzten Nutzfahrzeuges, da entsprechende Reparaturintervalle wesentlich verlängert werden.

Im Übrigen sind in Betrieb befindliche Scheibenbremsen im Reparaturfall mit erfindungsgemäßen Loslagern nachrüstbar.

Nach der Erfindung ist vorgesehen, die Kappe am Bremssattel anzuschlagen, wobei der Anschlagbereich der Kappe vorzugsweise als umlaufender, radial nach auβen gerichteter Kragen ausgebildet ist, der in einer Senkung des Bremssattels einliegen kann.

Weiter ist vorgesehen, die Kappe form- und/oder reibschlüssig mit der Führungsbuchse zu verbinden.

Dabei kann die Kappe reibschlüssig an der Elastomer-Lagerhülse anliegen. Denkbar ist aber auch, die Kappe alternativ oder zusätzlich mit einem die Elastomer-Lagerhülse umgebenden Metallhülse zu verbinden, die im Übrigen bereichsweise mit der Elastomer-Lagerhülse vergossen ist.

Die Verbindung der Kappe mit der Metallhülse, die vorzugsweise aus Stahl besteht, erfolgt über einen Presssitz, während die Anlage der Elastomer-Lagerhülse an der Kappe durch umlaufende, angeformte Lippen erfolgt, die unter Verformung an der Innenwandung der Kappe anliegen.

In Kombination mit dem Presssitz der Metallhülse wird so auf einfache Weise eine zuverlässige Abdichtung des Loslagers durch die Kappe erreicht.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben:

Es zeigen:
- Figur 1: eine Scheibenbremse in einer schematischen Draufsicht
- Figur 2: einen Teilausschnitt der Scheibenbremse gemäß der Kennzeichnung "A" in Figur 1
- Figur 3: einen vergrößerten Teilausschnitt einer Einzelheit der Scheibenbremse, entsprechen der Kennzeichnung III in Figur 2.

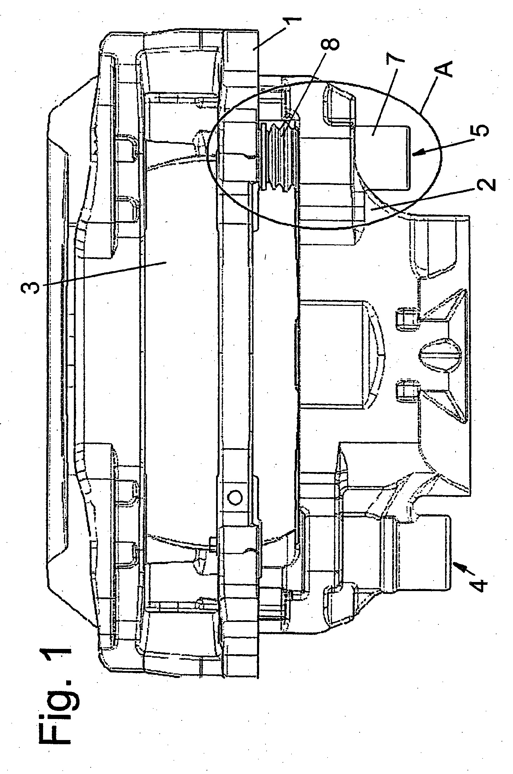

In der Figur 1 ist eine Scheibenbremse, insbesondere für ein Nutzfahrzeug dargestellt, die in ihrem Grundaufbau einen Bremssattel 2 aufweist, der eine Bremsscheibe 3 umfasst, die an einer nicht dargestellten Achse des Nutzfahrzeuges befestigt ist.

Der Bremssattel 2 ist an einem Bremsträger 1 des Nutzfahrzeuges, bezogen auf die Bremsscheibe 3 axial verschiebbar angeordnet.

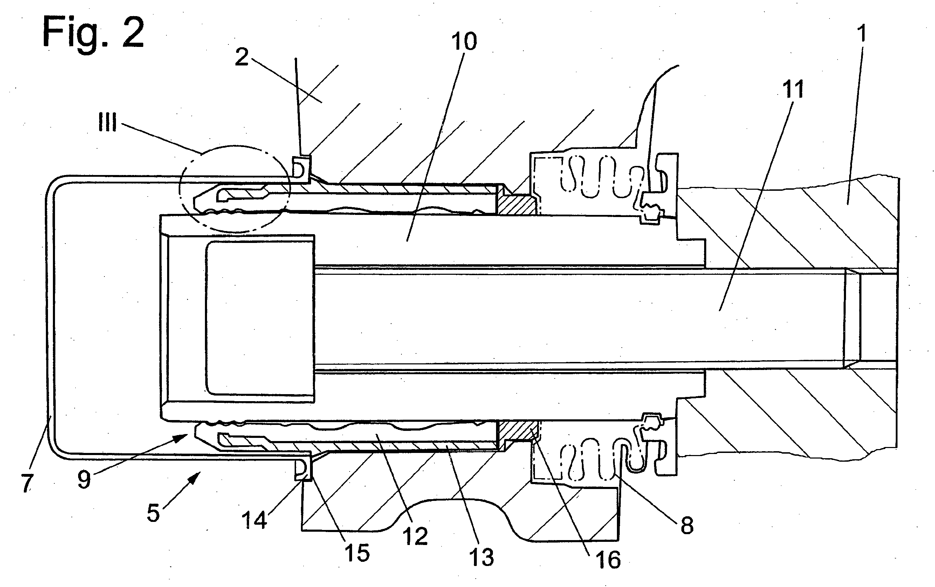

Hierzu sind zwei Befestigungselemente vorgesehen, die jeweils einen mit dem Bremsträger 1 fest verbundenen Führungsholm 10 aufweisen (Figur 2), der mittels einer Schraube 11 am Bremsträger 1 befestigt ist.

In der Figur 2 ist ein Ausführungsbeispiel des Loslagers 5 dargestellt, das eine den Führungsholm 10 umgreifende und verschiebegesichert am Bremssattel 2 angeschlossene Führungsbuchse 9 aufweist, mit einer Elastomer-Lagerhülse 12, die am Führungsholm 10 anliegt.

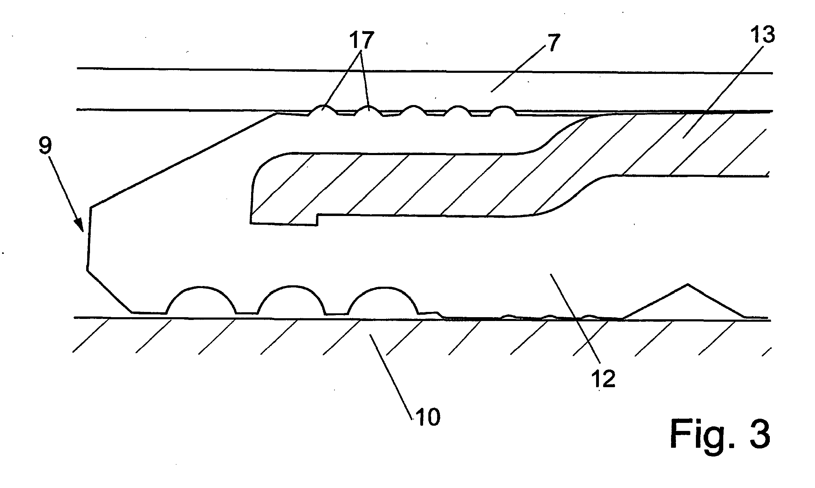

Außenseitig ist die Elastomer-Lagerhülse 12 von einer damit verbundenen Metallhülse 13 umhüllt, die bereichsweise von der Elastomer-Lagerhülse 12 umgossen ist, wie dies besonders deutlich in der Figur 3 erkennbar ist.

Auf der der Bremsscheibe 3 abgewandten Seite werden die Stirnseiten des Führungsholms 10 und der Führungsbuchse 9 von einer Kappe 7 überdeckt, die form- und/oder reibschlüssig an der Führungsbuchse 9 befestigt ist.

Auf seiner dem Bremssattel 2 zugewandten offenen Seite weist die Kappe 7 einen umlaufenden, sich radial nach außen erstreckenden Kragen 14 auf, der in einer Senkung 15 des Bremssattels 2 einliegt.

An dem der Kappe 7 abgewandten Ende liegt die Führungsbuchse 9 an einem sich im Bremssattel 2 abstützenden Anschlagring 16 an, durch den eine maximale Verpressung der Elastomer-Lagerhülse 12 bei einer äußeren Krafteinwirkung begrenzt wird.

Der der Bremsscheibe 3 zugewandte Bereich zwischen einer die Führungsbuchse 9 aufnehmenden Aufnahmebohrung und dem gegenüber der Führungsbuchse 9 vorstehenden Führungsholm 10 ist durch einen Faltenbalg 8 abgedichtet.

In der Figur 3 ist ein vergrößerter Ausschnitt der Verbindung der Kappe 7 mit der Führungsbuchse 9 dargestellt.

Es ist erkennbar, dass die Metallhülse 13 einen eingeschnürten Endbereich aufweist, der in die Elastomer-Lagerhülse 12 durch Umgießen eingebettet ist.

Auf der der Kappe 7 zugewandten Außenseite ist die Elastomer-Lagerhülse 12 in dem die Einschnürung überdeckenden Bereich mit umlaufenden Lippen 17 versehen, die vor einem Aufsetzen der Kappe 7 gegenüber dem größeren Durchmesser der Metallhülse 13 vorstehen.

Zur Befestigung der Kappe 7 auf der Führungsbuchse 9 wird die Kappe 7 mit der Metallhülse 13 im größeren Durchmesserbereich verpresst, während die Lippen 17 unter elastischer Verformung entsprechend ihren Rückstellkräften an der Innenwandung der Kappe 7 anliegen. Dadurch wird sowohl ein sicherer wie auch ein dichter Verbund zwischen der Kappe 7 und der Führungsbuchse 9 gewährleistet.

### Bezugszeichenliste

- 1: Bremsträger
- 2: Bremssattel
- 3: Bremsscheibe
- 4: Festlager
- 5: Loslager
- 6:
- 7: Kappe
- 8: Faltenbalg
- 9: Führungsbuchse
- 10: Führungsholm
- 11: Schraube
- 12: Elastomer-Lagerhülse
- 13: Metallhülse
- 14: Kragen
- 15: Senkung
- 16: Anschlagring
- 17: Lippe

## Patentansprüche

1. Scheibenbremse für ein Nutzfahrzeug, mit einem eine Bremsscheibe (3) umfassenden Bremssattel (2), der an einem ortsfesten Bremsträger (1) durch zwei Befestigungselemente, bezogen auf die Bremsscheibe (3) axial verschiebbar befestigt ist, wobei die Befestigungselemente jeweils einen mit dem Bremsträger (1) fest verbundenen Führungsholm (10) aufweisen, von denen zur axialen Verschiebbarkeit des Bremssattels (2) einer in einem als Festlager (4) und der andere in einem als Loslager (5) ausgebildeten Gleitlager geführt ist, wobei zumindest das Loslager (5) eine den Führungsholm (10) umgreifende und verschiebegesichert am Bremssattel (2) angeschlossene Führungsbuchse (9) mit einer Elastomer-Lagerhülse (12) aufweist und der Führungsholm (10) auf seiner der Bremsscheibe (3) abgewandten Stirnseite mit einer Kappe (7) abgedeckt ist, **dadurch gekennzeichnet, dass** die Kappe (7) am Bremssattel (2) anliegt und unter stirnseitiger Überdeckung der Führungsbuchse (9) (2) zumindest in einem axialen Teilbereich außenseitig an der Elastomer-Lagerhülse (12) befestigt ist.

2. Scheibenbremse nach Anspruch 1, **dadurch gekennzeichnet, dass** die Elastomer-Lagerhülse (12) außenseitig bereichsweise von einer Metallhülse (13) umhüllt ist.

3. Scheibenbremse nach Anspruch 1 oder 2, **dadurch gekennzeichnet, dass** die Metallhülse (13) auf ihrer der Kappe (7) zugewandten Seite einen umfänglich eingeschnürten Bereich aufweist, der in die Elastomer-Lagerhülse eingebettet ist.

4. Scheibenbremse nach einem der vorhergehenden Ansprüche, **dadurch gekennzeichnet, dass** die Kappe (7) form- und/oder reibschlüssig in einem Teilbereich der Außenwandung der Elastomer-Lagerhülse gehalten ist.

5. Scheibenbremse nach einem der vorhergehenden Ansprüche, **dadurch gekennzeichnet, dass** die Kappe (7) neben der form- und/oder reibschlüssigen Verbindung mit der Elastomer-Lagerhülse (12) auf die Metallhülse (13) auf gepresst ist.

6. Scheibenbremse nach einem der vorhergehenden Ansprüche, **dadurch gekennzeichnet, dass** der die Einschnürung der Metallhülse (13) überdeckende Bereich der Elastomer-Lagerhülse (12) auf seiner der Kappe (7) zugewandten Außenseite mit mindestens einer umlaufenden Lippe (17) versehen ist, die unter elastischer Verformung an der Innenwandung der Kappe (7) anliegt.

7. Scheibenbremse nach einem der vorhergehenden Ansprüche, **dadurch gekennzeichnet, dass** die Kappe (7) einen sich radial nach außen erstreckenden umlaufenden Kragen (14) aufweist, der am Bremssattel (2) anliegt.

8. Scheibenbremse nach einem der vorhergehenden Ansprüche, **dadurch gekennzeichnet, dass** der Kragen (14) in einer Senkung (15) des Bremssattels (2) einliegt.

9. Scheibenbremse nach einem der vorhergehenden Ansprüche, **dadurch gekennzeichnet, dass** die Führungsbuchse (9) mit ihrer der Kappe (7) gegenüberliegenden Stirnseite an einem Anschlagring (16) anliegt, der im Bremssattel (2) gehalten ist.

## Claims

1. Disc brake for a commercial vehicle, having a brake calliper (2), which surrounds a brake disc (3) and which is secured to a fixed adapter (1) by means of two fastening elements so as to be axially movable in relation to the brake disc (3), with the fastening elements having in each case one guide bar (10) which is permanently connected to the adapter (1), of which, for the axial mobility of the brake calliper (2), one guide bar (10) is guided in a plain bearing which is embodied as a fixed bearing (4) and the other guide bar (10) is guided in a plain bearing which is embodied as a floating bearing (5), with at least the floating bearing (5) having a guide bush (9), which engages around the guide bar (10) and which is connected to the brake calliper (2) so as to be immovable, with an elastomer bearing sleeve (12), and with the guide bar (10) being covered, on its end side facing away from the brake disc (3), by a cap (7), **characterised in that** the cap (7) bears against the brake calliper (2) and is secured, so as to cover the guide bush (9) at the end side, to the elastomer bearing sleeve (12) at least in an axial part-region at the outer side.

2. Disc brake according to claim 1, **characterised in that** the elastomer bearing sleeve (12) is encased at the outside in regions by a metal sleeve (13).

3. Disc brake according to claim 1 or 2, **characterised in that** the metal sleeve (13) has, on its side facing toward the cap (7), a peripherally constricted region which is embedded into the elastomer bearing sleeve.

4. Disc brake according to any of the preceding claims, **characterised in that** the cap (7) is held in a positively locking and/or frictionally locking fashion in a part-region of the outer wall of the elastomer bearing sleeve.

5. Disc brake according to any of the preceding claims, **characterised in that**, in addition to the positively locking and/or frictionally locking connection to the elastomer bearing sleeve (12), the cap (7) is pressed onto the metal sleeve (13).

6. Disc brake according to any of the preceding claims, **characterised in that** the region of the elastomer bearing sleeve (12) which covers the constriction of the metal sleeve (13) is provided, on its outer side facing toward the cap (7), with at least one continuous lip (17) which bears under elastic deformation against the inner wall of the cap (7).

7. Disc brake according to any of the preceding claims, **characterised in that** the cap (7) has a radially outwardly extending continuous collar (14) which bears against the brake calliper (2).

8. Disc brake according to any of the preceding claims, **characterised in that** the collar (14) rests in a depression (15) of the brake calliper (2).

9. Disc brake according to any of the preceding claims, **characterised in that** the guide bush (9) bears, with its end face situated opposite the cap (7), against a stop ring (16) which is held in the brake calliper (2).

## Revendications

1. Frein à disque pour un véhicule utilitaire, comprenant un étrier (2) de frein, qui entoure un disque (3) de frein et qui est fixé, avec possibilité de coulissement axial par rapport au disque (3) de frein, à un support (1) de frein à poste fixe par deux éléments de fixation, les éléments de fixation ayant respectivement un bras (10) de guidage, qui est relié fixement au support (1) de frein et dont l'un, pour la possibilité de coulissement axial de l'étrier (2) de frein, est guidé dans un palier lisse constitué sous la forme d'un palier (4) fixe et l'autre dans un palier lisse constitué sous la forme d'un palier (5) libre, dans lequel au moins le palier (5) libre a un manchon (9) de guidage, qui entoure le bras (10) de guidage, qui est raccordé sans pouvoir coulisser à l'étrier (2) de frein et qui a un coussinet (12) en élastomère et le bras (10) de guidage est, sur son côté frontal éloigné du disque (3) de frein, recouvert d'un capot (7), **caractérisé en ce que** le capot (7) s'applique à l'étrier (2) de frein et est fixé, en recouvrant du côté frontal le manchon (9) de guidage, au moins dans une zone partielle axiale du côté extérieur au coussinet (12) en élastomère.

2. Frein à disque suivant la revendication 1, **caractérisé en ce que** le coussinet (12) en élastomère est enveloppé du côté extérieur, au moins par endroit, d'un coussinet (13) métallique.

3. Frein à disque suivant la revendication 1 ou 2, **caractérisé en ce que** le coussinet (13) métallique a, sur son côté tourné vers le capot (7), une zone resserrée périphériquement, qui est noyée dans le coussinet en élastomère.

4. Frein à disque suivant l'une des revendications précédentes, **caractérisé en ce que** le capot (7) est maintenu par complémentarité de forme et/ou par frottement dans une région partielle de la paroi extérieure du coussinet en élastomère.

5. Frein à disque suivant l'une des revendications précédentes, **caractérisé en ce que** le capot (7) est, en plus de la liaison par complémentarité de forme et/ou par frottement avec le coussinet (12) en élastomère, pressé sur le coussinet (13) métallique.

6. Frein à disque suivant l'une des revendications précédentes, **caractérisé en ce que** la partie, recouvrant le resserrement du coussinet (13) métallique, du coussinet (12) en élastomère est pourvue, sur son côté extérieur tourné vers le capot (7), d'au moins une lèvre (17) qui fait le tour et qui s'applique avec déformation élastique à la paroi intérieure du capot (7).

7. Frein à disque suivant l'une des revendications précédentes, **caractérisé en ce que** le capot (7) a un collet (14) faisant le tour, s'étendant radialement vers l'extérieur et s'appliquant à l'étrier (2) de frein.

8. Frein à disque suivant l'une des revendications précédentes, **caractérisé en ce que** le collet (4) pénètre dans une partie (15) abaissée de l'étrier (2) de frein.

9. Frein à disque suivant l'une des revendications précédentes, **caractérisé en ce que** le manchon (9) de guidage s'applique, par son côté frontal opposé au capot (7), à un anneau (16) de butée, qui est maintenu dans l'étrier (2) de frein.
